Europäisches Patentamt

European Patent Office

Office européen des brevets

(11) Publication number: **0 435 168 A2**

# EUROPEAN PATENT APPLICATION

(21) Application number: 90124912.8

(22) Date of filing: 20.12.90

(51) Int. Cl.⁵: G01V 3/10

(30) Priority: 20.12.89 JP 331994/89

(43) Date of publication of application:
03.07.91 Bulletin 91/27

(84) Designated Contracting States:
AT BE CH DE DK ES FR GB GR IT LI LU NL SE

(71) Applicant: OMRON CORPORATION
10, Tsuchido-cho Hanazono Ukyo-ku
Kyoto 616(JP)

(72) Inventor: Tomioka, Hidehiro
10-6-101, Nishida, Inokurashinmachi
Ayabe-shi, Kyoto-fu(JP)
Inventor: Hosoya, Masakatsu
10-2, 2-chome, Kokanage, Ohi-cho
Kameoka-shi, Kyoto-fu(JP)
Inventor: Ueda, Kenji
18-31, 3-chome, Karasaki
Otsu-shi, Shiga-ken(JP)

(74) Representative: WILHELMS, KILIAN &
PARTNER Patentanwälte
Eduard-Schmid-Strasse 2
W-8000 München 90(DE)

(54) **Differential coil type proximity switch.**

(57) A differential coil type proximity switch which detects an object based on the difference in resonant frequency between resonant circuits composed of a detector coil and a comparator coil, respectively, each coil being connected to a capacitor has two cores: a first core, into which the detector coil is inserted in such a way that its edge opens onto the detecting surface; and a second core, substantially adjacent to the first core and composed or an identical material, and into which the comparator coil is inserted. It is also has an adjustable core slug, which is adjusted by means or a screw thread in the center of the second core provided for that purpose, which eliminates the need for a separate trimmer capacitor.

EP 0 435 168 A2

## DIFFERENTIAL COIL TYPE PROXIMITY SWITCH

FIELD OF INVENTION

This invention relates to a differential coil type proximity switch which can detect an object based on the frequency differential between two parallel resonant circuits which have a similar resonant frequency and to the structure of the detector head of this switch.

BACKGROUND OF THE INVENTION

Previous types of differential coil proximity switches which detected variations in frequency differential had two resonant circuits. One of these was a detector circuit inlaid into a pot core and connected to a capacitor in the same fashion as any ordinary high-frequency resonance proximity switch. The other was a parallel circuit composed of a trimmer inductor and a capacitor connected to it. When the proximity of an object caused the resonant frequency of the detector circuit to vary, the abject could be detected.

With this existing type of differential coil proximity switch, there were large phase differences due to differences between the material of the detector head coil and that of the variable trimmer inductor. Also, in many cases the trimmer inductor was mounted some distance from the coil on the circuit board, which resulted in non-uniformity of temperature. As a result, the switch had a pronounced tendency to become unstable due to temperature drift.

SUMMARY OF THE INVENTION

The basic features of this invention attempt to address these problems of previous differential coil proximity switches by reducing or eliminating this thermal disequilibrium.

This invention is a differential coil type proximity switch which detects an object based on the difference in resonant frequency between resonant circuits composed of a detector coil and a comparator coil, respectively, each coil being connected to a capacitor. Its distinguishing feature is that it has two cores: a first core, into which the detector coil is inserted in such a way that its edge opens onto the detecting surface; and a second core, substantially adjacent to the first core and composed of an identical material, and into which the comparator coil is inserted. In this application, "substantially adjacent" means sufficiently close together that significant uniformity in temperature is achieved and the disadvantages of the prior art are avoided.

Furthermore, this switch has the distinguishing feature of an adjustable core slug, which is adjusted by means of a screw thread in the center of the second core provided for that purpose.

The differential coil-type proximity switch of this invention has two cores, a first core and a second core, composed of an identical material and placed so that they are substantially adjacent to each other, a detector coil, inserted into core 1, and a comparator coil, inserted into the second core, which respectively are components of two resonant circuits. This design allows the thermal conditions of the two cores to be virtually identical. This allows the proximity switch to be stable in regard to temperature drift.

Furthermore, the second core is furnished with a trimmer mechanism which allows the inductance to be adjusted precisely so that the resonant frequencies will be identical. And because the back of the detector coil forms a closed magnetic circuit for the comparator coil, the design of the detector head is simplified, the packaging volume is reduced, and the entire switch can be downsized. The absence of an inductor on the circuit board also contributes to the compactness of the switch.

The invention also includes a mechanism for adjusting the inductance of the comparator coil. Because it eliminates the need for a trimmer capacitor, it simplifies the design of the switch and allows its size to be reduced.

BRIEF DESCRIPTION OF THE DRAWINGS

FIG. 1 shows a cross section of the detector head of a proximity switch according to an exemplary embodiment of this invention.

FIG. 2 is a circuit diagram showing a differential coil type oscillator circuit useful in the proximity switch of this invention.

FIG. 3 is a circuit diagram showing another example of an oscillator circuit.

FIG. 4 shows a cross section of the detector head of another example of a proximity switch according to this invention.

DETAILED DESCRIPTION OF THE INVENTION

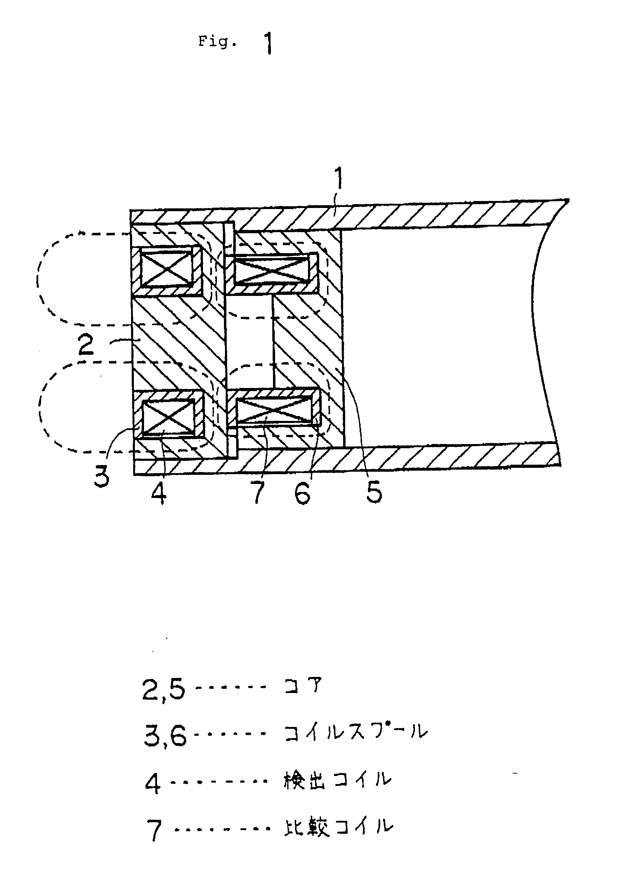

FIG. 1 shows a cross section of the detector head of a proximity switch according to this invention. As shown in Fig. 1, core 2 is mounted in a circular depression formed on the front surface of case 1 of the proximity switch. Detector coil 4 is mounted in coil bobbin 3, which is inset within core 2. Core 5 is mounted directly behind core 2. The center area of core 5 is cut out to form a round depression, in which comparator coil 7 is mounted inside coil bobbin 6. Coil bobbin 6 is glued to the back portion of core 2 and is mounted in such a way that the gap between core 2 and core 5 is extremely small.

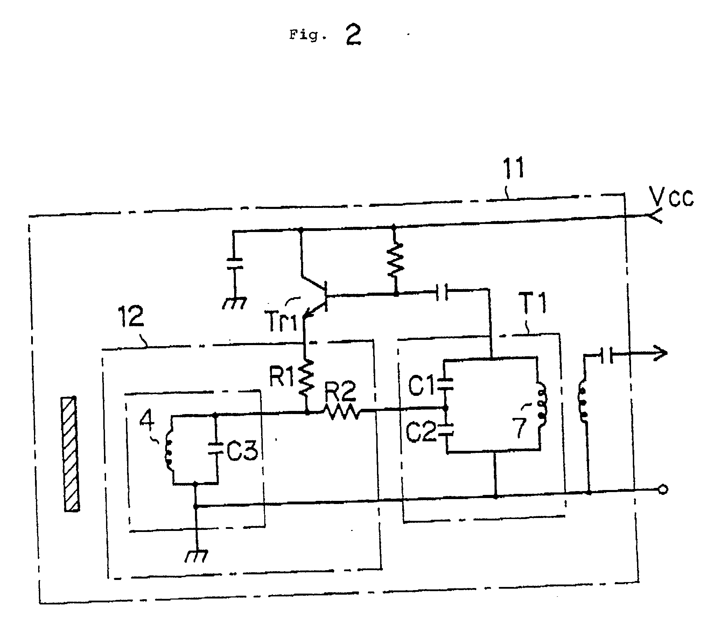

We shall now explain an example of a differential coil type oscillator circuit with two coils, constructed as described above by reference to FIG. 2. Oscillator circuit 11 has two tank circuits, tank circuit T1, composed of comparator coil 7 and capacitors C1 and C2, and tank circuit T2, composed of detector coil 4 and capacitor C3. Tank circuit T1 is connected to the base of transistor Tr1, and tank circuit T2 is connected to the emitter of transistor Tr1. Positive feedback circuit 12 comprises the feedback to tank circuit T1 produced by resistors R1 and R2, which are between the two tank circuits.

Let us call the resonant frequencies of tank circuits T1 and T2 in oscillator circuit 11 f1 and f2, respectively. Let us assume that frequency f2 is slightly higher than frequency f1. This will cause oscillator circuit 11 to oscillate at the points where the resonant frequencies intersect. Comparator coil 7 has a closed magnetic circuit, which is indicated by a dotted line in FIG. 1. Detector coil 4 has an open magnetic circuit, also indicated by a dotted line. If a metal object comes in proximity to the center of the open magnetic circuit, the resonant frequency f2 of tank circuit T2 will change. The resonant frequency of tank circuit T1 will remain unchanged at this time. This frequency differential forms the basis on which an object can be detected. To prevent variations due to temperature, coils 4 and 7 will have identical temperature characteristics in the proximity switch of this invention, so the temperature characteristics of the circuits will be virtually identical.

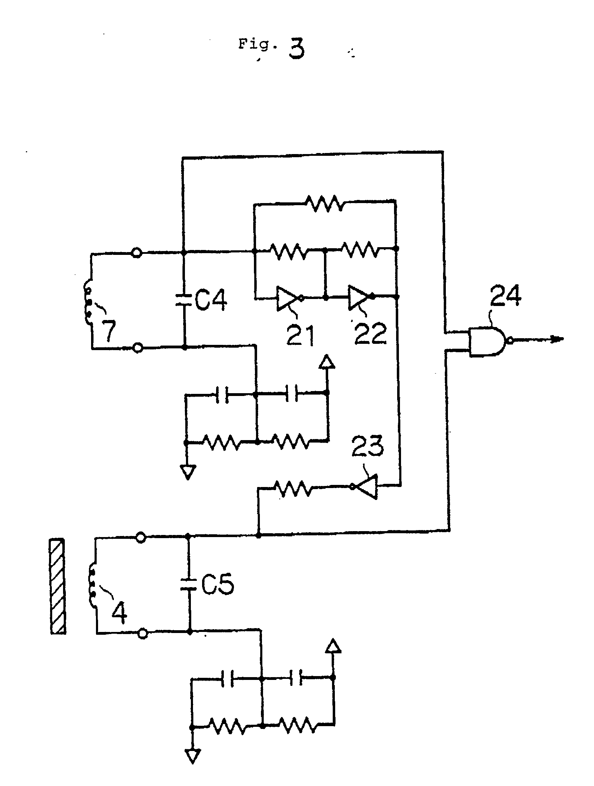

FIG. 3 is a block diagram illustrating another example of an oscillator circuit. In this circuit, resistors R3 and R4 are connected in cascade between the input and output terminals of inverters 21 and 22. Resistor R5 is also connected between the input and output terminals, thus forming an oscillator circuit. The input terminal of inverter 21 is connected to a resonant circuit comprising comparator coil 7 and capacitor C4, and the output terminal of inverter 22 is connected through inverter 23 to a resonant circuit comprising detector coil 4 and capacitor 5. The resonant frequencies of these resonant circuits largely conform to the oscillating frequency of the oscillator circuit. The other terminal of each of the resonant circuits is connected to a DC bias circuit so that it is at the voltage point midway between the power supply and the ground terminal. The output from one terminal of the resonant circuits is fed to each of the input terminals of And circuit 24. With this arrangement, the resonant frequencies will remain in conformity as long as there is no object in proximity of detector coil 4, and the duty factor for the output which is obtained from And circuit 24 will be large. When an object comes in proximity to detector coil 4, the resonant frequency will change, and the duty factor will decrease. Thus the circuit can detect the proximity of an object by means of a change in the duty factor. AS a result, this invention can be applied to a variety of differential coil type proximity switches employing high frequency oscillation and multiple coils.

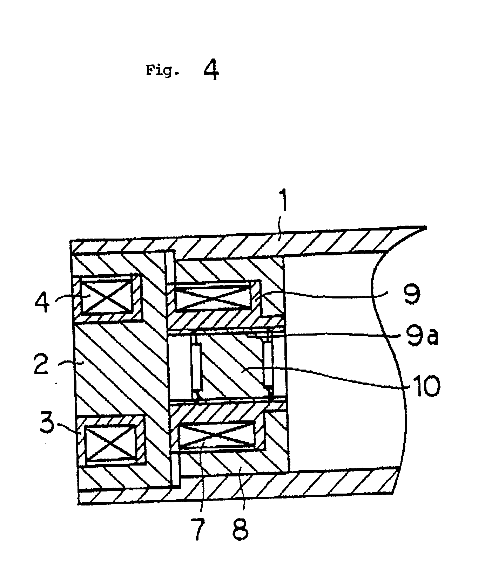

FIG. 4 shows a cross section of the detector head of another proximity switch according to this invention. In this example, coil bobbin 9, which has screw thread 9a cut into it, is placed in the center of cylindrical core 8. By adjusting core slug 10 to the desired position, one can change the inductance of comparator coil 7. In this way, the resonant frequency of the resonant circuit comprising the comparator coil can be adjusted by changing the position of the core slug. This eliminates the need for a trimmer capacitor and simplifies the design of the proximity switch, allowing the switch itself to be downsized.

It is to be understood that the disclosure in this application is exemplary and not limiting, and that this invention is not limited to the specific exemplary embodiments disclosed herein.

## Claims

1. A differential coil type proximity switch which can detect an object based on the difference in resonant frequency between resonant circuits, comprising a detector coil and a comparator coil, each coil being connected to a capacitor, and further comprising:
a first core composed of a material, into which the detector coil is placed so that its edge opens onto the detecting surface;
a second core substantially adjacent to the first core and composed of a material substantially identical to the material of which the first core is composed and into which the comparator coil is placed.

2. A differential coil type proximity switch according to claim 1, further comprising an adjustment slug for adjusting the position of the second core by means of a screw thread provided in the second core.

Fig. 1

2,5 ······ コア

3,6 ······ コイルスプール

4 ········ 検出コイル

7 ········ 比較コイル

Fig. 2

Fig. 3

Fig. 4